# EUROPEAN PATENT SPECIFICATION

(11) **EP 4 187 552 B1**
(45) Date of publication and mention of the grant of the patent: **20.08.2025**
(21) Application number: 21846315.6
(22) Date of filing: 12.07.2021
(51) Int. Cl.: G21C 15/02, G21C 15/18, F22B 37/26, G01F 23/00, F22B 37/00, G21D 1/00, G21D 3/06

(54) **SYSTEM FOR UTILIZING UNUSED HEAT-EXCHANGE WATER OF PASSIVE AUXILIARY FEEDWATER SYSTEM, AND REACTOR COOLING CONTROL METHOD UTILIZING UNUSED HEAT-EXCHANGE WATER OF PASSIVE AUXILIARY FEEDWATER SYSTEM**
SYSTEM ZUR VERWENDUNG VON UNBENUTZTEM WÄRMEAUSTAUSCHWASSER EINES PASSIVEN HILFSSPEISEWASSERSYSTEMS UND REAKTORKÜHLUNGSSTEUERUNGSVERFAHREN
SYSTÈME D'UTILISATION D'EAU D'ÉCHANGE DE CHALEUR NON UTILISÉE D'UN SYSTÈME D'EAU D'ALIMENTATION AUXILIAIRE PASSIF, ET PROCÉDÉ DE COMMANDE DE REFROIDISSEMENT DE RÉACTEUR UTILISANT DE L'EAU D'ÉCHANGE DE CHALEUR NON UTILISÉE D'UN SYSTÈME D'EAU D'ALIMENTATION AUXILIAIRE PASSIF

(30) Priority: 23.07.2020 KR 20200091357
(43) Date of publication of application: 31.05.2023
(73) Proprietor: Korea Hydro & Nuclear Power Co., Ltd, 38120 Gyeongsangbuk-do (KR)
(72) Inventor: MOON, Ho Rim, Sejong 30150 (KR); KANG, Sang Hee, Daejeon 35284 (KR); HA, Huiun, Daejeon 34082 (KR)
(74) Representative: Rösler Rasch van der Heide & Partner
(86) International application number: PCT/KR2021/008919
(87) International publication number: WO 2022/019555

(56) References cited:
- CN-A- 103 617 815
- JP-A- 2010 112 772
- JP-A- 2015 534 649
- KR-A- 20130 023 964
- KR-A- 20130 129 606
- KR-A- 20140 047 452
- KR-A- 20200 033 375
- KR-B1- 101 221 812
- KR-B1- 101 224 024
- KR-B1- 101 553 894
- US-B2- 10 115 488

## Description

### Technical Field

The present disclosure relates to a system for utilizing unused heat-exchange water of a passive auxiliary feedwater system, and a reactor cooling control method utilizing the unused heat-exchange water of the passive auxiliary feedwater system and, more particularly, to a system for utilizing unused heat-exchange water of a passive auxiliary feedwater system, and a reactor cooling control method utilizing the unused heat-exchange water of the passive auxiliary feedwater system, which allow residual water (unused heat-exchange water) remaining after heat exchange in a passive condensation tank to be utilized as cooling water for cooling a nuclear reactor.

### Background Art

A nuclear power plant is a facility that generates steam by transferring heat to water passing through a steam generator using thermal energy generated by nuclear fission of fuel and obtains electrical energy by operating turbines and a generator with the steam generated above. A nuclear power plant is to be provided with facilities that allow a reactor core that holds nuclear fuel and a reactor coolant system that transfers heat energy generated at a nuclear reactor to a secondary side to be safely operated within a design range, thereby maintaining the safety of nuclear power plant and preventing diffusion of radioactive materials.

To accomplish this, a nuclear power plant is equipped with an engineered safety feature system so as to safely shut the power plant down in an event of an accident. The engineered safety feature system includes a containment system, an emergency core cooling system, and a passive auxiliary feedwater system.

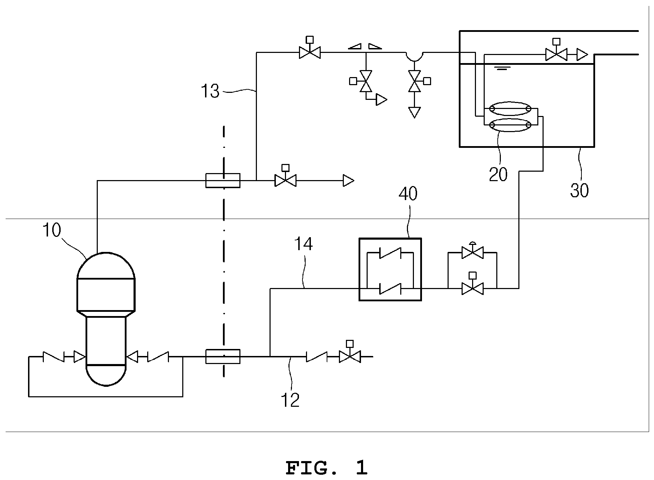

As an example of a passive auxiliary feedwater system, FIG. 1 shows a passive secondary side condensation system of a light water reactor disclosed in Korean Patent No. 10-1022164. With reference to FIG. 1, the passive secondary side condensation system of a conventional light water reactor, the system including: a steam generator 10 to generate steam by heat of the nuclear reactor; a main steam line 11 to supply heat from the steam generator 10 to a turbine side; and a main water supply line 12 in which water that steam passing through the turbine is condensed by heat exchange with cooling water is recovered to the steam generator 10. In addition, the above system is to cut off steam supply to the turbine side when the operation of the nuclear reactor is stopped and to allow, after condensing the steam that is introduced through the steam supply line 13 that is branched off from the main steam line 11 by heat exchange in a condenser 20 immersed in the passive condensation tank 30, condensate water to be merged into the main water supply line 12 through a condensate water recovery line 14 connected to an outlet of the condenser 20, wherein disclosed is a configuration of a backflow prevention unit 40 arranged for preventing the backflow of condensate water in the condensate water recovery pipe 14.

According to such a passive secondary side condensation system, without being provided with a separate active means such as a pump, the steam generated in the steam generator 10 by a natural convection manner is condensed in the condenser 20 and then returned to the steam generator 10 to cool the nuclear reactor, thereby having an advantage of preventing overheating of the nuclear reactor in case of an accident at a nuclear power plant.

However, in the above conventional passive auxiliary feedwater supply system, in a process of condensing water being produced through the condenser 20, the heat-exchange water stored in the passive condensation tank 30 is evaporated while exchanging heat with the condenser 20 through which high-temperature steam passes. After a certain period of time has elapsed, there occurs a situation in which the water level of the passive condensation tank 30 decreases and heat-exchange water needs to be filled. An operation and a process of filling the heat-exchange water into the passive condensation tank 30 takes a lot of work time, so there is a problem in that response efficiency is lowered when an accident occurs in a nuclear reactor. The amount of heat-exchange water stored in the passive condensation tank 30 is usually 670,000 gallons, which is an amount sufficient to generate condensate water for about by 8 hours. Even it varies depending on the severity of the nuclear accident, when the reactor accident is not resolved even when the heat-exchange water in the passive condensation tank 30 is exhausted, as described above, it takes time starting from filling the heat-exchange water into the passive condensation tank 30 to generating condensate water. Therefore, it is difficult to effectively respond to the occurrence of a nuclear accident, and when an initial response is delayed, it may cause a problem in that the occurrence of a nuclear accident may proliferate.

### Documents of Related Art

### [Patent Document]

Korean Patent No. 10-1022164
Japanese Patent Application JP 2010 112772 A
Japanese Patent Application JP 2015 534649 A3
Chinese Patent Application CN 103 617 815 A
Korean Patent Application KR 2013 0129606 A

### Disclosure

### Technical Problem

Accordingly, the present disclosure has been made keeping in mind the above problems occurring in the related art, and an objective of the present disclosure is to provide a system for utilizing unused heat-exchange water of a passive auxiliary feedwater system, and a reactor cooling control method utilizing the unused heat-exchange water of the passive auxiliary feedwater system capable of directly using unused heat-exchange water as much as the amount between the condenser arranged in the passive condensation tank and a bottom part of the passive condensation tank as cooling water for cooling the reactor, thereby increasing efficiency of use of cooling water in coping with an event of a nuclear reactor accident.

### Technical Solution

In order to accomplish the above objective, there may be provided a system for utilizing unused heat-exchange water of a passive auxiliary feedwater system according to the present disclosure, the system including: a steam generator to generate steam by heat from a nuclear reactor; a passive condensation tank in which heat-exchange water is stored; a condenser arranged inside the passive condensation tank and spaced apart from a bottom part of the passive condensation tank; a steam supply line arranged between the steam generator and an inlet of the condenser inside the passive condensation tank and providing a pipeline for cutting off steam supply to a turbine side and branching the steam off to the condenser when an operation of the nuclear reactor is stopped; and a condensate water recovery line arranged between an outlet of the condenser and the steam generator and providing a pipeline for recovering condensate water through the condenser to the steam generator, wherein a residual water discharge flow path is arranged between the passive condensation tank and the condensate water recovery line and discharges remaining water remaining between the condenser and the bottom part of the passive condensation tank to the condensate water recovery line; wherein the passive condensation tank (30) is provided with a water level measuring sensor to measure a level of heat-exchange water therein, and the residual water discharge flow path is provided with an automatic valve therein; and the automatic valve automatically opens the residual water discharge flow path based on water level detection of the water level measuring sensor.

At this time, the residual water discharge flow path may be connected to a lowest point of the passive condensation tank.

In addition, the system may be to allow residual water discharged from the residual water discharge flow path to fall freely into the condensate water recovery line.

In order to accomplish another objective, there may be provided a reactor cooling control method utilizing unused heat-exchange water of a passive auxiliary feedwater system according to the present disclosure, the method including: supplying steam from a steam generator to a condenser when a nuclear reactor accident occurs; supplying condensate water condensed from the condenser to a nuclear reactor side as cooling water; measuring water level of a passive condensation tank; and opening a residual water discharge flow path based on a heat-exchange water level of the passive condensation tank and supplying heat-exchange water in the passive condensation tank to a nuclear reactor as cooling water.

At this time, the heat-exchange water in the passive condensation tank may fall freely into the condensate water recovery line.

### Advantageous Effects

As described above, a system for utilizing unused heat-exchange water of a passive auxiliary feedwater system, and a reactor cooling control method using the unused heat-exchange water of the passive auxiliary feedwater system according to the present disclosure allow the unused heat-exchange water remaining, that is, heat-exchange water not in contact with a condenser, after evaporation in a heat-exchange process in a passive condensation tank to be used as cooling water for cooling the nuclear reactor. Accordingly, the present disclosure can have an effect of increasing efficiency in terms of utilizing the unused heat-exchange water remaining in the passive condensation tank.

In addition, even when the supply of condensate water is stopped as a heat-exchange task is stopped due to evaporation of the heat-exchange water in an event of an accident, the present disclosure can immediately utilize residual water remaining in the passive condensation tank as cooling water so as to achieve the continuity of the cooling task of the nuclear reactor. Accordingly, the initial response efficiency can be increased, so there is an effect of preventing the problem from diffusing.

### Description of Drawings

FIG. 1 is a system diagram showing a passive auxiliary feedwater system of a nuclear power plant according to conventional art.
FIG. 2 is a system diagram showing a system for utilizing unused heat-exchange water in a passive auxiliary feedwater system according to an exemplary embodiment of the present disclosure.
FIG. 3 is a view showing a modified example of a passive condensation tank of the system for utilizing unused heat-exchange water in a passive auxiliary feedwater system according to the exemplary embodiment of the present disclosure.
FIG. 4 is a flowchart showing a reactor cooling control method utilizing the unused heat-exchange water of the passive auxiliary feedwater system according to the exemplary embodiment of the present disclosure.

### Best Mode

Terms or words used in the present specification and claims are not limited to usual or dictionary meanings and, on the basis of a principle that the inventors may properly define a concept of the terms to explain the invention thereof in the best way, should be interpreted as meaning and concept consistent with the technical spirit of the present disclosure.

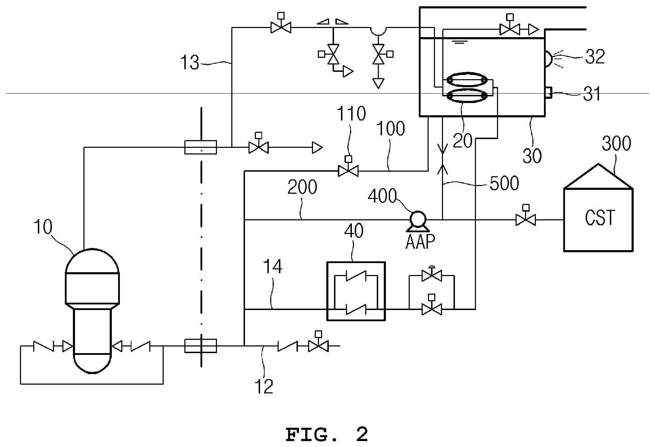

Hereinafter, a system for utilizing unused heat-exchange water of a passive auxiliary feedwater system according to an exemplary embodiment of the present disclosure will be described with reference to FIGS. 2 to 4 attached hereto. Prior to the description, same numerals are marked together with respect to the same components as those in conventional art, respectively, and detailed descriptions will be omitted.

The system for utilizing unused heat-exchange water of a passive auxiliary feedwater system allows heat-exchange water, which is no longer able to be used for heat exchange by being evaporated during a heat-exchange process in a passive condensation tank, to be immediately put into a cooling task for a steam generator, thereby increasing efficiency in responding to nuclear reactor accidents. Residual water refers to the unused heat-exchange water corresponding to the amount as much as a volume between a bottom part of the passive condensation tank and the condenser. In the present specification, the residual water and the unused heat-exchange water are used interchangeably.

As shown in FIG. 2, the system for utilizing unused heat-exchange water of a passive auxiliary feedwater system includes a steam generator 10, a passive condensation tank 30, a condenser 20, a steam supply line 13, a condensate water recovery line 14, and a residual water discharge flow path 100.

The heat-exchange water for condensation is stored in the passive condensation tank 30, and the condenser 20 is immersed into and arranged in the heat-exchange water. At this time, in order to improve structural characteristics and condensation efficiency, the condenser 20 is arranged to be spaced apart from the bottom part of the passive condensation tank 30. Accordingly, the heat-exchange water generates the unused heat-exchange water as much as the volume between the condenser 20 and the bottom part of the passive condensation tank 30. That is, a condensation action through the condenser 20 occurs in a process of heat exchange while the condenser 20 is brought into contact with the heat-exchange water. When an entire condenser 20 is exposed out of the heat-exchange water, the heat-exchange action is unable to be performed. Therefore, when the heat-exchange water evaporates and has a level decrease during the condensation process, the unused heat-exchange water is unavoidably generated in the passive condensation tank 30.

A water level measuring sensor 31 for detecting generation of the unused heat-exchange water is arranged in the passive condensation tank 30. The water level measuring sensor 31 detects the water level of the passive condensation tank 30 but is for detecting the water level when the entire condenser 20 is exposed out of the heat-exchange water while detecting the water level decreasing as the heat-exchange water evaporates during the condensation process. That is, it is understandable that the water level at which the water level sensor 31 detects that the unused heat-exchange water has occurred should be lower than a lowest point of the condenser 20. Meanwhile, an alarm signal generator 32 capable of notifying a manager of an occurrence of the unused heat-exchange water may be further arranged in the passive condensation tank 30 when the water level measuring sensor 31 detects the time that the unused heat-exchange water occurs as the heat-exchange water level decreases.

The residual water discharge flow path 100 provides a pipeline for sending the residual water, that is, unused heat-exchange water, generated in the passive condensation tank 30 to the steam generator 10, and is arranged between the passive condensation tank 30 and the condensate water recovery line 14. The residual water discharge flow path 100 is to use the heat-exchange water having decreased usefulness remaining after the condensation process, through the condenser 20 as cooling water, and is, when the accident has not been resolved only with the condensate water in the event of a nuclear reactor accident, to allow the remaining unused heat-exchange water to be used as cooling water. The unused heat-exchange water supplied through the residual water discharge flow path 100 may be provided so as to freely fall into the condensate water recovery line 14. At this time, an automatic valve 110 capable of automatically opening and closing the pipeline of the residual water discharge flow path 100 is arranged in the residual water discharge flow path 100. The residual water discharge flow path 100 is to be closed through the automatic valve 110 normally but, when unused heat-exchange water occurs in the event of a nuclear reactor accident, is automatically to be opened through the automatic valve 110, thereby allowing the unused heat-exchange water to be automatically supplied as the cooling water to the steam generator 10.

Meanwhile, as shown in FIG. 2, along with the residual water discharge flow path 100, an extra flow path 200 may be further arranged. When the steam generator 10 is not sufficiently cooled only with the unused heat-exchange water of the passive condensation tank 30, the extra passage 200 is to supply the existing water stored in the condensate storage tank 300 to the steam generator 10 by being additionally opened. The condensate storage tank 300 is a facility, which is provided at ordinary times, in which water is collected after turning the steam exhaust of the turbine into the water through the condenser.

The extra flow path 200 is connected between the condensate storage tank 300 and the condensate water recovery line 14, and an auxiliary charging pump 400 for pumping water in the condensate storage tank 300 is arranged in the extra flow path 200. The auxiliary charging pump 400 serves to supply water from the condensate storage tank 300 to the steam generator 10 and to perform a pumping action for filling the heat-exchange water into the passive condensation tank 30. That is, the auxiliary charging pump 400 may replenish the passive condensation tank 30 with the water in the condensate storage tank 300 as heat-exchange water through the pumping flow path 500. The pumping flow path 500 is connected between the passive condensation tank 30 and the extra flow path 200.

In addition, the auxiliary charging pump 400 serves to pump and supply heat-exchange water from the passive condensation tank 30 to the steam generator 10. As described above, the heat-exchange water is supplied from the passive condensation tank 30 to the steam generator 10 by freely falling through the residual water discharge flow path 100. Furthermore, supply of the heat-exchange water from the passive condensation tank 30 to the steam generator 10 may also be accomplished by pumping the heat-exchange water in the passive condensation tank 30 to the steam generator 10 through the auxiliary charging pump 400.

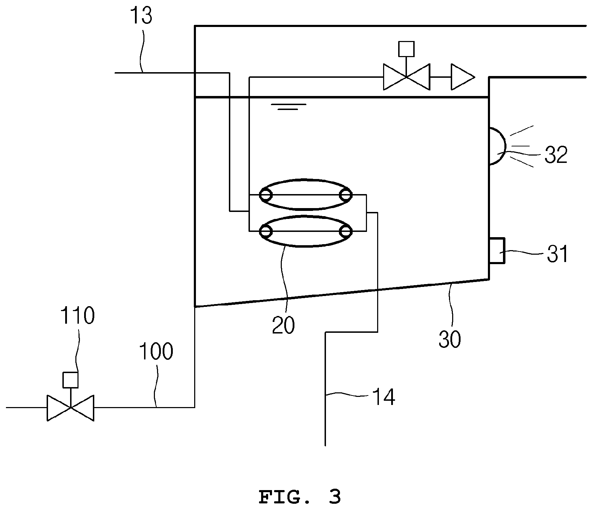

Meanwhile, as shown in FIG. 3, the bottom part of the passive condensation tank 30 may be inclined to one side. This is to suppress the generation of residual water as much as possible, thereby allowing the unused heat-exchange water to be used as cooling water as much as possible. At this time, the residual water discharge flow path 100 is arranged at a lowest point of the bottom part of the passive condensation tank 30.

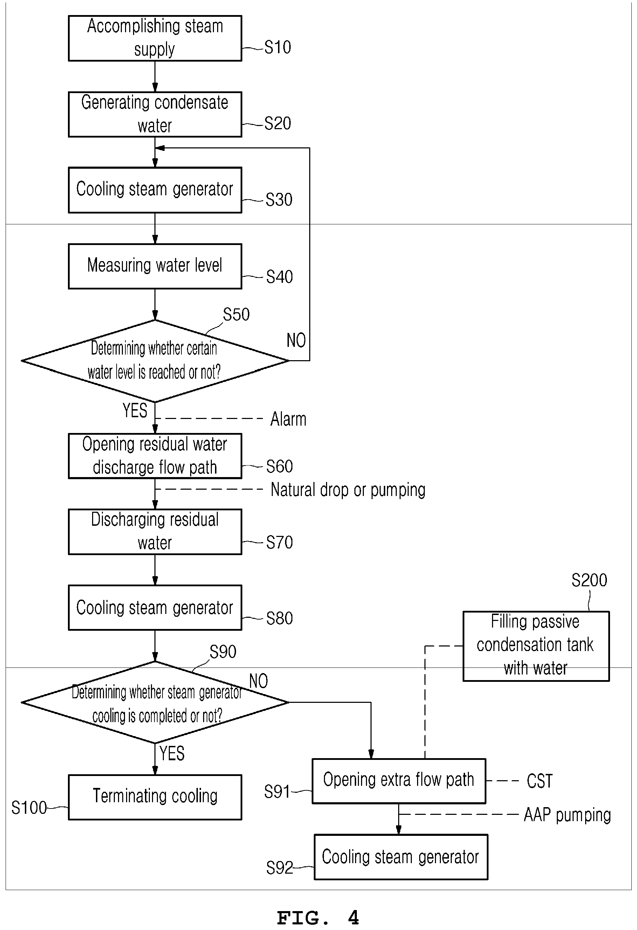

Hereinafter, a reactor cooling control method utilizing the system for utilizing the unused heat-exchange water of the passive auxiliary feedwater system as described above will be described with reference to FIG. 4.

When an accident occurs during normal operation of a nuclear power plant, steam supply from the steam generator 10 to the turbine is cut off and the steam supply to the condenser 20 inside the passive condensation tank 30 is accomplished through the steam supply line 13 in S10.

High-temperature steam is discharged through the inlet of the condenser 20 to the outlet of the condenser 20, and in this process, the high-temperature steam exchanges heat with the heat-exchange water stored in the passive condensation tank 30 to generate condensate water in S20. At this time, the heat-exchange water gradually evaporates in the process of heat exchange, and the level of the heat-exchange water in the passive condensation tank 30 gradually decreases.

The condensate water is recovered to a reactor side where the accident occurred through the condensate water recovery line 14 to continuously cool the steam generator 10 in S30.

At this time, the water level measuring sensor 31 continuously measures the level of the heat-exchange water being evaporated, in S40.

At this time, the water level measuring sensor 31 determines whether the measured water level has reached a certain water level in S50. At this time. the certain water level of the water refers to a water level when the water level of the heat-exchange water is less than the lowest point of the condenser 20. In a period before the water level detected by the water level sensor 30 reaches the certain level, the condensate water is continuously supplied and the steam generator 10 is cooled in S20 and S30.

On the other hand, when the level of the heat-exchange water in the passive condensation tank 30 detected by the water level measuring sensor 31 is the certain level, the controller (not shown) actuates an alarm signal generator 32, thereby allowing the manager to recognize an alarm and actuates an automatic valve 110 to open the residual water discharge flow path 100 in S60.

At this time, the condensation action of the condenser 20 is stopped, and the residual water remaining in the passive condensation tank 30, that is, the unused heat-exchange water, freely falls into the condensate water recovery line 14 through the residual water discharge flow path 100 in S70. At this time, the auxiliary charging pump 400 may also supply the unused heat-exchange water to the condensate water recovery line 14.

Thereafter, the unused heat-exchange water discharged through the condensate water recovery line 14 is supplied to the steam generator 10 to perform a cooling task in S80.

At this time, the manager determines whether the cooling of the steam generator is completed in S90. When the cooling of the steam generator is completed, the manager terminates the cooling system normally, in S100.

When the cooling of the steam generator is not completed only by supplying the unused heat-exchange water, the manager opens the extra flow path 200 in S91. Accordingly, the system becomes a state in which the water stored in the condensate storage tank 300 may be supplied through the extra flow path 200. Thereafter, the manager actuates the auxiliary charging pump 400 to supply the water in the condensate storage tank 300 to the steam generator 10 and successively performs a cooling task.

Meanwhile, the manager may open the pumping flow path 500 and actuate the auxiliary charging pump 400 to fill the passive condensation tank 30 with water in the condensate storage tank 300 in S200.

As described so far, the system for utilizing unused heat-exchange water of a passive auxiliary feedwater system and the reactor cooling control method utilizing the unused heat-exchange water of the passive auxiliary feedwater system according to the present disclosure have a technical feature such that the unused heat-exchange water, which remains but is unable to be used for heat exchange with the condenser, may be used as cooling water. Accordingly, in the event of a nuclear reactor accident, it is possible to increase utilization of the cooling water and suppress the diffusion of the accident by increasing the efficiency of an initial response.

Although the present disclosure has been described in detail with respect to the described embodiments, it is obvious to those skilled in the art that various changes and modifications are possible within the scope of the appended claims.

## Claims

1. A system for utilizing unused heat-exchange water of a passive auxiliary feedwater system, the system comprising:
a steam generator (10) to generate steam by heat from a nuclear reactor;
a passive condensation tank (30) in which heat-exchange water is stored;
a condenser (20) arranged inside the passive condensation tank (30) and spaced apart from a bottom part of the passive condensation tank (30);
a steam supply line (13) arranged between the steam generator (10) and an inlet of the condenser (20) inside the passive condensation tank (30) and providing a pipeline for cutting off steam supply to a turbine side and branching the steam off to the condenser (20) when an operation of the nuclear reactor is stopped; and
a condensate water recovery line (14) arranged between an outlet of the condenser (20) and the steam generator (10) and providing a pipeline for recovering condensate water through the condenser (20) to the steam generator (10), **characterized in that**
a residual water discharge flow path (100) is arranged between the passive condensation tank (30) and the condensate water recovery line (14) and discharges remaining water remaining between the condenser (20) and the bottom part of the passive condensation tank (30) to the condensate water recovery line (14);
the passive condensation tank (30) is provided with a water level measuring sensor (31) to measure a level of heat-exchange water therein, and the residual water discharge flow path is provided with an automatic valve (110) therein;
and
the automatic valve (110) adapted to automatically open the residual water discharge flow path (100) based on water level detection of the water level measuring sensor (31).

2. The system of claim 1, wherein the residual water discharge flow path is connected to a lowest point of the passive condensation tank (30).

3. The system of claim 1 or 2, wherein the system is to allow residual water discharged from the residual water discharge flow path to fall freely into the condensate water recovery line (14).

## Patentansprüche

1. System zum Verwenden von unbenutztem Wärmeaustauschwasser eines passiven Hilfsspeisewassersystems, wobei das System aufweist:
einen Dampferzeuger (10), um durch Wärme von einem Kernreaktor Dampf zu erzeugen;
einen passiven Kondensationsbehälter (30), in dem Wärmeaustauschwasser gespeichert wird;
einen Kondensator (20), der innerhalb des passiven Kondensationsbehälters (30) angeordnet und von einem Bodenteil des passiven Kondensationsbehälters (30) beabstandet ist;
eine Dampfzuführleitung (13), die zwischen dem Dampferzeuger (10) und einem Einlass des Kondensators (20) innerhalb des passiven Kondensationsbehälters (30) angeordnet ist und eine Rohrleitung zum Absperren der Dampfzufuhr zu einer Turbinenseite und Abzweigen des Dampfes zu dem Kondensator (20), wenn ein Betrieb des Kernreaktors angehalten wird, vorsieht; und
eine Kondenswasserrückführungsleitung (14), die zwischen einem Auslass des Kondensators (20) und dem Dampfgenerator (10) angeordnet ist und eine Rohrleitung zum Rückführen von Kondenswasser durch den Kondensator (20) zu dem Dampfgenerator (10) vorsieht,
**dadurch gekennzeichnet, dass**
ein Restwasserabführströmungsweg (100) zwischen dem passiven Kondensationsbehälter (30) und der Kondenswasserrückführungsleitung (14) angeordnet ist und Restwasser, das zwischen dem Kondensator (20) und dem Bodenteil des passiven Kondensationsbehälters (30) zurückbleibt, zu der Kondenswasserrückführungsleitung (14) abführt;
der passive Kondensationsbehälter (30) mit einem Wasserpegelmesssensor (31) versehen ist, um darin einen Wärmeaustauschwasserpegel zu messen, und der Restwasserabführströmungsweg mit einem automatischen Ventil (110) darin versehen ist; und
das automatische Ventil (110) dazu ausgebildet ist, den Restwasserabführströmungsweg (100) basierend auf einer Wasserpegelerfassung durch den Wasserpegelmesssensor (31) automatisch zu öffnen.

2. System nach Anspruch 1, wobei der Restwasserabführströmungsweg mit einem untersten Punkt des passiven Kondensationsbehälters (30) verbunden ist.

3. System nach Anspruch 1 oder 2, wobei das System Restwasser, das von dem Restwasserabführströmungsweg abgeführt wird, frei in die Kondenswasserrückführungsleitung (14) fallen lassen soll.

## Revendications

1. Système permettant d'utiliser l'eau d'échange thermique inutilisée d'un système d'eau d'alimentation auxiliaire passif, le système comprenant :
un générateur de vapeur (10) pour produire de la vapeur par la chaleur à partir d'un réacteur nucléaire ;
un réservoir de condensation passif (30) dans lequel de l'eau d'échange thermique est stockée ;
un condenseur (20) disposé à l'intérieur du réservoir de condensation passif (30) et espacé d'une partie inférieure du réservoir de condensation passif (30) ;
une conduite d'alimentation en vapeur (13) disposée entre le générateur de vapeur (10) et une entrée du condenseur (20) à l'intérieur du réservoir de condensation passif (30) et créant une canalisation pour couper l'alimentation en vapeur d'un côté turbine et ramifier la vapeur vers le condenseur (20) lorsqu'un fonctionnement du réacteur nucléaire est arrêté ; et
une conduite de récupération d'eau de condensation (14) disposée entre une sortie du condenseur (20) et le générateur de vapeur (10) et créant une canalisation pour récupérer l'eau de condensation à travers le condenseur (20) jusqu'au générateur de vapeur (10),
**caractérisé en ce**
**qu'**une voie d'écoulement d'évacuation d'eau résiduelle (100) est disposée entre le réservoir de condensation passif (30) et la conduite de récupération d'eau de condensation (14) et évacue l'eau restant entre le condenseur (20) et la partie inférieure du réservoir de condensation passif (30) vers la conduite de récupération d'eau de condensation (14) ;
le réservoir de condensation passif (30) est équipé d'un capteur de mesure du niveau d'eau (31) pour mesurer un niveau d'eau d'échange thermique dedans, et que la voie d'écoulement d'évacuation d'eau résiduelle est pourvue d'une vanne automatique (110) à l'intérieur ; et
**que** la vanne automatique (110) est conçue pour ouvrir automatiquement la voie d'évacuation d'écoulement d'évacuation d'eau résiduelle (100) en fonction de la détection du niveau d'eau par le capteur de mesure du niveau d'eau (31).

2. Système selon la revendication 1, dans lequel la voie d'écoulement d'évacuation d'eau résiduelle est reliée à un point le plus bas du réservoir de condensation passif (30).

3. Système selon la revendication 1 ou 2, dans lequel le système est destiné à laisser l'eau résiduelle déchargée s'évacuer de la voie d'écoulement d'évacuation d'eau résiduelle pour tomber librement dans la conduite de récupération d'eau de condensation (14).
